# EUROPEAN PATENT APPLICATION

(11) **EP 4 447 212 A1**
(43) Date of publication of application: **16.10.2024**
(21) Application number: 23217536.4
(22) Date of filing: 18.12.2023
(51) Int. Cl.: H01M 50/242, H01M 50/213, H01M 50/291, H01M 50/264

(54) **RECHARGEABLE BATTERY MODULE**

(30) Priority: 14.04.2023 KR 20230049498
(71) Applicant: Samsung SDI Co., Ltd., Yongin-si, Gyeonggi-do 17084 (KR)
(72) Inventor: PARK, Sanghun, 17084 Yongin-si (KR)
(74) Representative: Marks & Clerk LLP

(57) **Abstract**

An embodiment of the present disclosure provides a rechargeable battery module that prevents tabs having different polarities from being electrically shortcircuited by a fastening member when a pair of holders are fastened with the fastening member. An embodiment provides a rechargeable battery module including: a first holder configured to accommodate first (lower) sides of a plurality of battery cells spaced apart in a first direction and a second direction crossing each other; a second holder configured to accommodate second (upper) sides of the battery cells; a coupling member formed of a conductive material and configured to fasten the first holder and the second holder to each other in a third direction crossing the second direction; a plurality of tabs configured to electrically connect the battery cells; and bus bars configured to connect the tabs to a battery management system (BMS), wherein at least one of the first holder or the second holder includes a rib protruded in the third direction.

## Description

### BACKGROUND

### (a) Technical Field

The present disclosure relates to a rechargeable battery module.

### (b) Description of the Related Art

A rechargeable battery can be repeatedly charged and discharged, unlike a primary battery. Small-capacity rechargeable batteries are used in portable electronic devices such as mobile phones, notebook computers, and camcorders. Large-capacity and high-density rechargeable batteries are used for power for motor driving of hybrid vehicles and electric vehicles, or energy storage.

The rechargeable battery may be used as a rechargeable battery module including a plurality of battery cells connected in series and/or parallel to drive a motor of, e.g., a hybrid vehicle requiring relatively high energy density. For example, the rechargeable battery module is formed by connecting electrode terminals of a plurality of battery cells provided in numbers corresponding to a desired power amount in order to implement a relatively high-output rechargeable battery module (e.g., an electric vehicle).

For example, such a rechargeable battery module includes a pair of holders, and is accommodated in a case by fastening the pair of holders accommodating battery cells with a fastening member (also known as a coupling member). Before fastening the pair of holders with the fastening member, the battery cells are connected with tabs. The tabs exist together with a tab having a negative electrode and a tab having a positive electrode on one surface of the holder at a first side. In addition, the tabs exist together with a tab having a negative electrode and a tab having a positive electrode on one surface of the holder at a second side. Accordingly, when the pair of holders are fastened by the fastening member, in the case where the fastening member is accidentally dropped, tabs having different polarities may be short-circuited by the fastening member.

### SUMMARY

The embodiments are related to a rechargeable battery module that fastens a pair of holders with a fastening member and connects tabs electrically connecting a plurality of battery cells accommodated in the holders to a battery management system with a bus bar.

Embodiments of the present disclosure provide a rechargeable battery module that prevents tabs having different polarities from being electrically short-circuited by a fastening member when a pair of holders are fastened with the fastening member.

An embodiment provides a rechargeable battery module including: a first holder configured to accommodate first (lower) sides of a plurality of battery cells spaced apart in a first direction and a second direction crossing each other; a second holder configured to accommodate second (upper) sides of the battery cells; a coupling member formed of a conductive material and configured to fasten the first holder and the second holder to each other in a third direction crossing the second direction; a plurality of tabs configured to electrically connect the battery cells; and bus bars configured to connect the tabs to a battery management system (BMS), wherein at least one of the first holder or the second holder includes a rib protruded in the third direction.

The tabs may include a first tab member that is bent to be positioned on an upper surface and a side surface of the second holder and is bent to be positioned on a lower surface and a side surface of the first holder to connect a plurality of battery cells in parallel; and a second tab member positioned on the upper surface of the second holder and the lower surface of the first holder to connect a plurality of battery cells in parallel and in series.

The first tab member may be provided as a single unit to have a positive or negative polarity, the second tab member may be provided in two, the second tab member adjacent to the first tab member among the two may have a polarity that is different from that of the first tab member, and two adjacent second tab members have different polarities.

The rib may be provided between the first tab member and the second tab member having different polarities and between the two second tab members having different polarities.

The rib may include curved portions formed as a curve along a shape of an accommodating hole of the second holder accommodating the battery cells, and a straight portion connecting the curved portions to each other in a straight line at a nearest distance.

The rib may further include an installation portion providing a position for installing a thermistor by removing some of the curved portions.

The coupling member may form a screw portion formed at a first end of a pillar to be coupled to the first holder through the second holder, and a head portion having a larger diameter than a diameter of the pillar at a second side of the pillar.

The rib may have a height (H) protruding in the third direction, and the height (H) may be formed larger than 1/2 of a size (D1-D2) obtained by subtracting a diameter (D2) of the pillar from a diameter (D1) of the head portion (H>(D1-D2)/2).

The coupling member may be formed longer than a shortest separation distance between the first tab member and the second tab member adjacent in the second direction and a shortest separation distance between the second tab members.

The lower surface of the first holder and the upper surface of the second holder may each include an accommodating portion corresponding to a thickness of the tab to accommodate the tabs.

The first holder may form an opening on a lower surface thereof with a depth reaching to an electrode terminal of the battery cells, the second holder may form an opening on an upper surface thereof with a depth reaching the electrode terminal of the battery cells, and the tab may include a connection portion that is bent at a first side of the accommodating portion by the depth of the opening to be connected to the electrode terminal.

According to an embodiment of the present disclosure, the rechargeable battery module may further include a case configured to accommodate a side (lower side) of the first holder, and a cover configured to cover a side (upper side) of the second holder, and the cover may include a rib facing and corresponding to the battery cells on an inner surface thereof.

The rib may be formed in a regular hexagon and may be repeatedly positioned in the first direction and the second direction.

At least some of the above and other features of the invention are set out in the claims.

The battery module according to an embodiment includes a rib in the first holder or the second holder, and thus when fastening the first and second holders with the fastening member, if the fastening member falls by mistake, the rib may lift a first end of the fastening member to prevent an end thereof from contacting a tab, thereby preventing an electrical short circuit between tabs having different polarities by the fastening member.

### BRIEF DESCRIPTION OF THE DRAWINGS

FIG. 1 illustrates a perspective view of a rechargeable battery according to a first embodiment of the present disclosure.
FIG. 2 illustrates an exploded perspective view of the rechargeable battery module according to the first embodiment of the present disclosure.
FIG. 3 illustrates a partial cross-sectional perspective view showing a relationship in which a first holder and a second holder are fastened with fastening members, taken along a line III-III of FIG. 1.
FIG. 4 illustrates a top plan view showing connection and arrangement relationships between battery cells and tabs on an upper surface of a second holder of the rechargeable battery module of FIG. 1.
FIG. 5 illustrates a top plan view showing connection and arrangement relationships between battery cells and tabs on a lower surface of a first holder of the rechargeable battery module of FIG. 1.
FIG. 6 illustrates a partial cross-sectional perspective view showing a connection state of tabs on a lower surface of a first holder and an upper surface of a second holder in FIG. 1.
FIG. 7 illustrates a perspective view of a secondary battery module (a state in which a core pack is connected to a case) according to a second embodiment of the present disclosure.
FIG. 8 illustrates a perspective view of a rechargeable battery module (a state in which a core pack is coupled to a cover) according to a second embodiment of the present disclosure.
FIG. 9 illustrates a longitudinal cross-sectional view taken along a line IX-IX in FIG. 8.

### DETAILED DESCRIPTION

Hereinafter, the present disclosure will be described more fully with reference to the accompanying drawings, in which embodiments of the disclosure are shown. As those skilled in the art would realize, the described embodiments may be modified in various different ways, all without departing from the scope of the present disclosure. The drawings and description are to be regarded as illustrative in nature and not restrictive. Like reference numerals designate like elements throughout the specification.

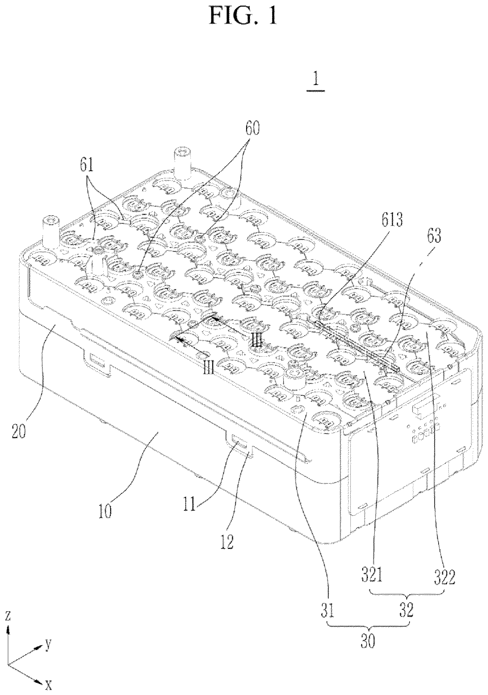

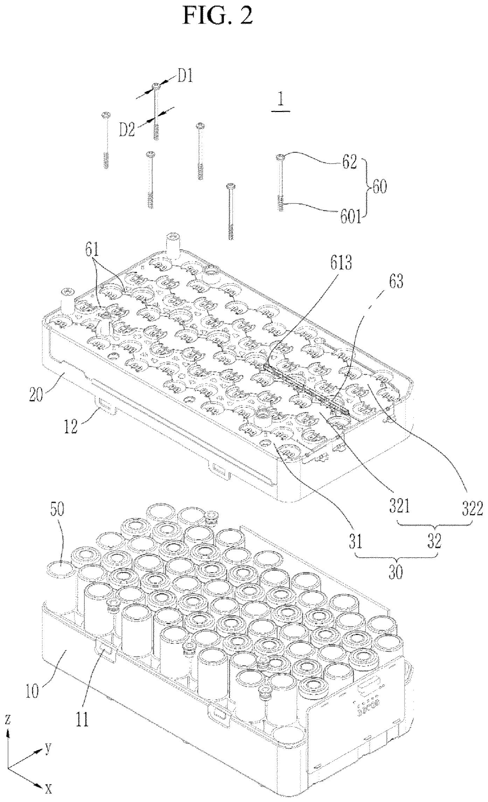

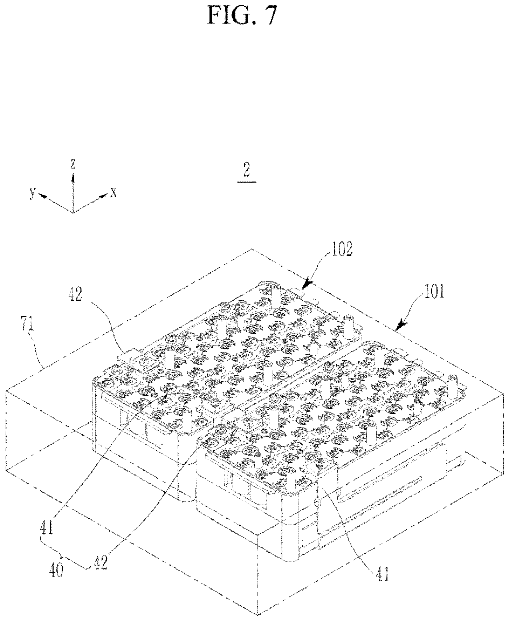

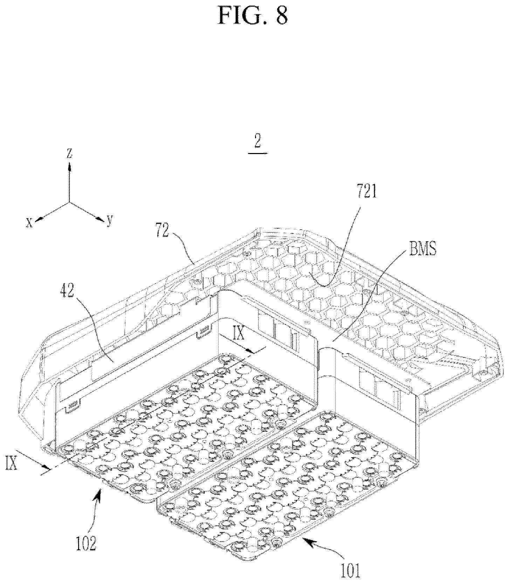

FIG. 1 illustrates a perspective view of a rechargeable battery according to a first embodiment of the present disclosure, and FIG. 2 illustrates an exploded perspective view of the rechargeable battery module according to the first embodiment of the present disclosure. Referring to FIG. 1 and FIG. 2, the rechargeable battery module 1 according to the first embodiment includes a first holder 10, a second holder 20, a coupling member 60, a plurality of tabs 30 (31 and 32) and a plurality of bus bars 40 (41 and 42) (referring to FIG.7 and FIG. 8).

As an example, the first holder 10 may form a bottom holder in the rechargeable battery module 1, the second holder 20 may form a top holder, and the tabs 30 may be formed of a nickel tab including a nickel material.

The first holder 10 and the second holder 20 may form a honeycomb structure therein to accommodate a plurality of battery cells 50 spaced apart in a first direction (x-axis direction) and a second direction (y-axis direction) crossing the first direction so as to be coupled to each other in a third direction (z-axis direction) crossing the second direction.

In a state of FIG. 1, the first holder 10 accommodates lower sides of the battery cells 50 and the second holder 20 accommodates upper sides of the battery cells 50. In this state, the first and second holders 10 and 20 are fastened with the coupling member 60.

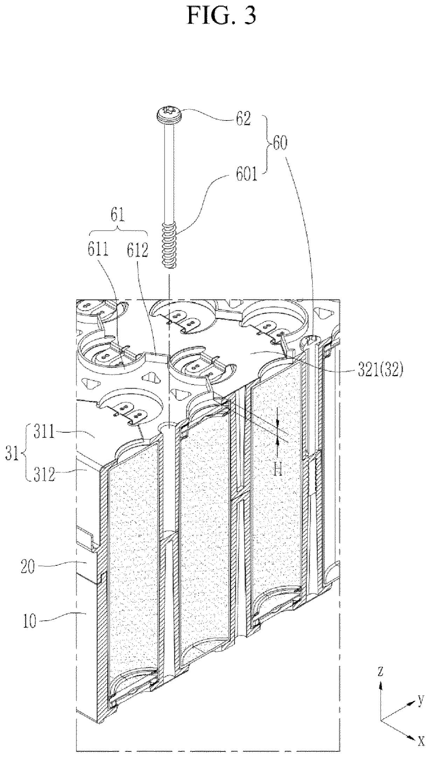

FIG. 3 illustrates a partial cross-sectional perspective view showing a relationship in which a first holder and a second holder are fastened with coupling members, taken along a line III-III of FIG. 1. Referring to FIG. 1 to FIG. 3, the first holder 10 and the second holder 20 may be coupled with a protrusion 11 provided on the outside of the first holder 10 in a snap fit structure of a coupling portion 12 provided on the outside of the second holder 20 corresponding to the protrusion 11.

As an example, the coupling member 60 is formed in a column structure longer than a height of the second holder 20, and to include screw portions 601 and head potions 62 at opposite ends of the column. The screw portions 601 are formed as screws at a first end of the pillar to be screwed into the first holder 10 through the second holder 20. The coupling member 60 is formed of a conductive material.

The head portions 62 are formed at a second side of the pillar with a diameter D1 greater than the diameter D2 of the pillar to be positioned on an upper surface of the second holder 20. The head portions 62 each are provided with a driver groove.

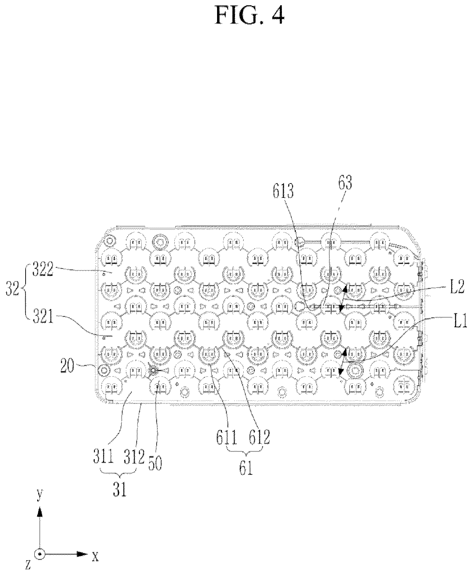

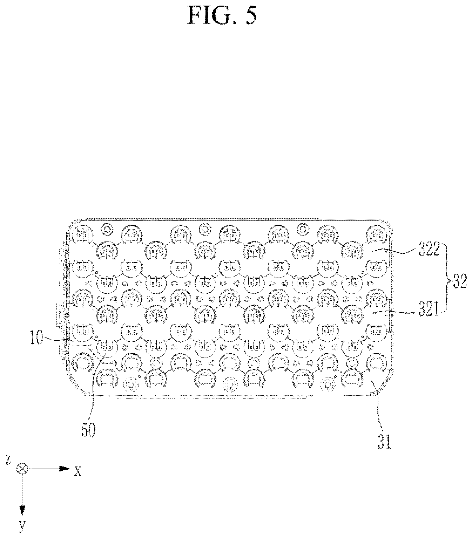

FIG. 4 illustrates a top plan view showing connection and arrangement relationships between battery cells and tabs on an upper surface of a second holder of the rechargeable battery module of FIG. 1, and FIG. 5 illustrates a top plan view showing connection and arrangement relationships between battery cells and tabs on a lower surface of a first holder of the rechargeable battery module of FIG. 1.

Referring to FIG. 1, FIG. 4, and FIG. 5, in the rechargeable battery module 1, the tabs 30 connect the battery cells 50 in series and in parallel.

As an example, the tabs 30 include one first tab member 31 and a plurality of second tab members 32 (321 and 322). The first tab member 31 is bent and disposed on upper and side surfaces of the second holder 20, and is bent to be positioned on lower and side surfaces of the first holder 10 to connect the battery cells 50 in parallel.

The first tab member 31, which is a bendable tab member, includes an inner flat portion 311 connected to the battery cells 50 and an inner side portion 312 bent from the inner flat portion 311 to be positioned on the side surfaces of the first and second holders 10 and 20.

The second tab members 32 (321 and 322) are positioned on the upper surface of the second holder 20 and the lower surface of the first holder 10 to connect the battery cells 50 in parallel or in series. The second tab members 32 (321 and 322) may be formed as a plate-shaped tab member connecting the battery cells 50 to each other.

That is, the first tab member 31 and the second tab members 32 (321 and 322) electrically connect the battery cells 50 in parallel and series along the first direction (x-axis direction) to separately position them in the second direction (y-axis direction).

The first tab member 31 and the second tab member 32 (321 and 322) are sequentially provided on the upper surface of the second holder 20 in the second direction, and are sequentially provided on the lower surface of the first holder 10 in the reverse direction of the second direction, which is a symmetrical structure, and thus the battery cells 50 are electrically connected in parallel and in series.

For convenience, a structure of the tabs 30 on the upper surface of the second holder 20 and a structure of the tabs 30 on the lower surface of the first holder 10 will be described together. The first tab member 31 electrically connects a first group of the battery cells 50 in parallel along the first direction. The second tab members 32 (321 and 322) electrically connect a second group of the battery cells 50 in parallel along the first direction. As the first and second tab members 31 and 32 are arranged in a symmetrical structure on the upper surface of the second holder 20 and the lower surface of the first holder 10, the first and second tab members 31 and 32 connected in parallel are connected in series.

As an example, if the first tab member 31 is provided as a single unit on the upper surface of the second holder 20 or the lower surface of the first holder 10 to have a positive or negative polarity, the second tab members 32 (321 and 322) are provided in two, so that the second tab member 321 adjacent to the first tab member 31 has a different polarity, and among the second tab members 32, the second tab members 321 and 322 have different polarities.

That is, if the first tab member 31 has a positive polarity, the second tab member 321 adjacent to the first tab member 31 has a negative polarity, and the other second tab member 322 has a positive polarity. Conversely, if the first tab member 31 is a negative polarity, the second tab member 321 adjacent to the first tab member 31 has a positive polarity, and the other second tab member 322 has a negative polarity.

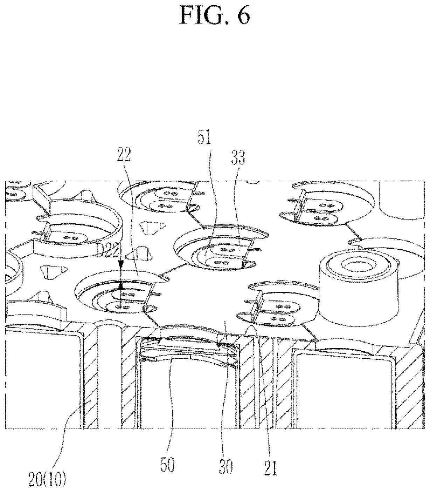

FIG. 6 illustrates a partial cross-sectional perspective view showing a connection state of tabs on a lower surface of a first holder and an upper surface of a second holder in FIG. 1. Referring to FIG. 6, the lower surface of the first holder 10 and the upper surface of the second holder 20 have accommodating portions 21. The accommodating portions 21 each are formed to correspond to a thickness of the tabs 30 so as to accommodate the tabs 30.

The first holder 10 and the second holder 20 each form an opening 22 having a depth D22 from lower and upper surfaces to electrode terminals 51 of the battery cells 50. The tab 30 has a connection portion 33 that is bent at a first side of the accommodating portion 21 by the depth D22 and connected to the electrode terminal 51.

As a result, the upper surface of the second holder 20 and the upper surface of the tab 30 form a plane having a same height. Accordingly, even if a rib 61 is formed on the upper surface of the second holder 20, if an insulating tape (not illustrated) is attached to the upper surface of the second holder 20 and the upper surface of the tab 30 after fastening the coupling member 60, adhesiveness of the insulating tape may be improved.

Referring again to FIG. 1, FIG. 2, and FIG. 4, at least one of the first holder 10 or the second holder 20 includes the rib 61 protruding in the third direction. The first embodiment provides the rib 61 in the second holder 20 positioned at an upper portion thereof in a state of the module 1.

The rib 61 is provided between the first tab member 31 and the second tab member 32 having different polarities and between the two second tab members 321 and 322. One of the ribs 61 is positioned between the first tab member 31 and the second tab member 32 having different polarities. Another rib 61 is positioned between the second tab member 321 and the second tab member 322 having different polarities.

The rib 61 includes a curved portion 611 and a straight portion 612. The curved portion 611 is formed as a curve according to a shape of an accommodating hole of the second holder 20 for accommodating the cylindrical battery cells 50
The straight portion 612 connects neighboring curved portions 611 to each other in a straight line at a nearest distance.

The rib 61 includes an installation portion 613 formed by removing a portion of the curved portion 612. The installation portion 613 makes it possible to secure a position and space for installing a thermistor 63 even when the rib 61 is formed.

The thermistor 63 is installed on the upper rib 61 positioned on the upper surface of the second holder 20 to detect a temperature of the upper surfaces of the tabs 30 and the second holder 20 and transmit data to the battery management system (BMS). The rib 61 stably senses a thermal signal by stably installing the thermistor 63, and transmits it as an electrical signal.

The rib 61 has a height H (see FIG. 3) protruding in the third direction, and the height H is greater than 1/2 of a size (D1-D2) obtained by subtracting a diameter D2 of the column from a diameter D1 (see FIG. 2) of the head portion 62 (H > (D1-D2)/2).

Accordingly, even if the coupling member 60 falls on the rib 61 of FIG. 4 and even if the screw portion 601 contacts the first tab member 31 at a first side, the head portion 62 does not come into contact with the second tab member 32 adjacent thereto. As a result, a short circuit of the first and second tab members 31 and 32 is prevented by the coupling member 60.

In addition, even if the coupling member 60 falls on the rib 61 and even if the screw portion 601 contacts the second tab member 321 at a first side, the head portion 62 does not come into contact with the other second tab member 322 adjacent thereto. As a result, a short circuit of the second and second tab members 32 (321 and 322) is prevented by the coupling member 60.

The coupling member 60 is formed longer than a shortest separation distance L1 between the first tab member 31 and the second tab member 32 adjacent in the second direction (y-axis direction) and a shortest separation distance L2 between the second tab members 32 (321 and 322)

Even if the coupling member 60 is formed longer than the shortest separation distances L1 and L2, a first side is lifted and separated from the tabs 30 by the rib 61, and thus a short circuit of the tabs 30 by the coupling member 60 may be prevented.

FIG. 7 illustrates a perspective view of a secondary battery module (a state in which a core pack is connected to a case) according to a second embodiment of the present disclosure, and FIG. 8 illustrates a perspective view of a rechargeable battery module (a state in which a core pack is coupled to a cover) according to a second embodiment of the present disclosure.

Referring to FIG. 7 and FIG. 8, the secondary battery module 2 according to the second embodiment is formed by embedding two core packs 101 and 102 in a case 71 and covering it with a cover 72. The case 71 protects the core packs 101 and 102. Each of the core packs 101 and 102 may form a plurality of series connections and a plurality of parallel connections with respect to the battery cells 50, and may be formed of the rechargeable battery module 1 of the first embodiment.

If the core packs 101 and 102 form a plurality of series connections and a plurality of parallel connections with respect to the battery cells 50, the rechargeable battery module 2 has a high voltage and current during use, it requires strong durability against external impact.

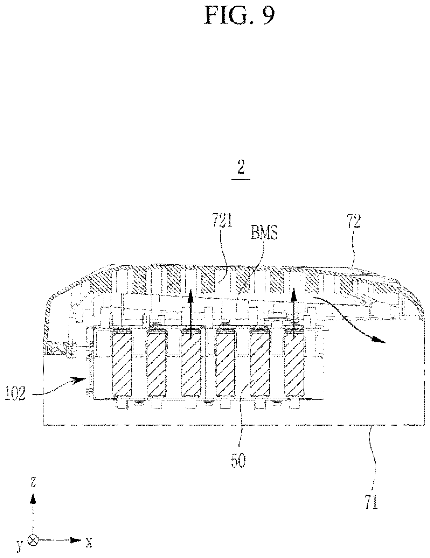

FIG. 9 illustrates a longitudinal cross-sectional view taken along a line IX-IX in FIG. 8. In the rechargeable battery module 2, the case 71 accommodates a side of the first holder 10, and the cover 72 covers a side of the second holder 20. The cover 72 includes a rib 721 facing the battery cell 50 on an inner surface thereof and corresponding thereto. The rib 721 has a height in the third direction, is formed in a regular hexagon in a xy plane, and is repeatedly positioned in the first and second directions.

Because the rib 721 increases strength of the cover 72, strong durability against external impact may be realized. In addition, the rib 721 facilitates gas discharge through a space formed between an inner surface of the cover 72 and the second holder 20 when an ignition event such as congestion of the battery cells 50 occurs, thus spread of fire to other neighboring battery cells 50 is prevented.

Referring back to FIG. 7 and FIG. 8, bus bars 40 (41 and 42) connect the tabs 30 to the battery management system BMS. As an example, the bus bars 40 include a first bus bar member 41 and a second bus bar member 42. Both of the core packs 101 and 102 include first and second bus bar members 41 and 42.

In the case of adjacent core packs 101 and 102, the first bus bar member 41 used in the core packs 101 and 102 is connected to the first tab member 31, which is a bent tab member, on the upper surface of the second holder 20 at a first side, and is connected to the management system BMS at a second side. The second bus bar member 42 is connected to the second tab member 322, which is a plate-shaped tab member, on the upper surface of the second holder 20 at a first side and connected to the battery management system BMS at a second side.

While this disclosure has been described in connection with what is presently considered to be practical embodiments, it is to be understood that the disclosure is not limited to the disclosed embodiments, but, on the contrary, is intended to cover various modifications and equivalent arrangements included within the scope of the appended claims.

### <Description of Symbols>

| | | | |
|---|---|---|---|
| 1, 2: | rechargeable battery module | 10: | first holder |
| 11: | protrusion | 12: | coupling member |
| 20: | second holder | 21: | accommodating portion |
| 22: | opening | 30: | tab |
| 31: | first tab member | 32, 321, 322: | second tab member |
| 33: | connection portion | 40: | bus bar |
| 41: | first bus bar | 42: | second bus bar |
| 50: | battery cell | 51: | electrode terminal |
| 60: | coupling member | | |
| 61: | rib | 62: | head portion |
| 63: | therm istor | | |
| 71: | case | 72: | cover |
| 101, 102: | core pack | 311: | inner flat portion |
| 312: | inner side portion | 601: | screw portion |
| 611: | curved portion | 612: | straight portion |
| 613: | installation portion | 721: | rib |
| BMS: | battery management system | D22: | depth |
| H: | height | L1: | shortest separation distance |

## Claims

1. A rechargeable battery module comprising:
a first holder configured to accommodate first sides of a plurality of battery cells spaced apart in a first direction and a second direction crossing each other;
a second holder configured to accommodate second sides of the battery cells;
a coupling member formed of a conductive material and configured to fasten the first holder and the second holder to each other in a third direction crossing the second direction;
a plurality of tabs configured to electrically connect the battery cells; and
bus bars configured to connect the tabs to a battery management system (BMS),
wherein at least one of the first holder or the second holder
includes a rib protruded in the third direction.

2. The rechargeable battery module as claimed in claim 1, wherein
the tabs include:
a first tab member that is bent to be positioned on an upper surface and a side surface of the second holder and is bent to be positioned on a lower surface and a side surface of the first holder to connect a plurality of battery cells in parallel; and
a second tab member positioned on the upper surface of the second holder and the lower surface of the first holder to connect a plurality of battery cells in parallel and in series.

3. The rechargeable battery module as claimed in claim 2, wherein
the first tab member is provided as a single unit to have a positive or negative polarity,
the second tab member is provided in two,
the second tab member adjacent to the first tab member among the two has a polarity that is different from that of the first tab member, and
two adjacent second tab members have different polarities.

4. The rechargeable battery module as claimed in claim 3, wherein
the rib
is provided between the first tab member and the second tab member having different polarities and between the two second tab members having different polarities.

5. The rechargeable battery module as claimed in claim 4, wherein
the rib
includes curved portions formed as a curve along a shape of an accommodating hole of the second holder accommodating the battery cells, and
a straight portion connecting the curved portions to each other in a straight line at a nearest distance.

6. The rechargeable battery module as claimed in claim 5, wherein
the rib
further includes an installation portion providing a position for installing a thermistor by removing some of the curved portions.

7. The rechargeable battery module as claimed in any one of claims 1 to 6, wherein
the coupling member
forms a screw portion formed at a first end of a pillar to be coupled to the first holder through the second holder, and
a head portion having a larger diameter than a diameter of the pillar at a second side of the pillar.

8. The rechargeable battery module as claimed in claim 7, wherein
the rib
has a height (H) protruding in the third direction, and
the height (H)
is formed larger than 1/2 of a size (D1-D2) obtained by subtracting a diameter (D2) of the pillar from a diameter (D1) of the head portion (H>(D1-D2)/2).

9. The rechargeable battery module as claimed in any one of claims 2 to 8, wherein
the coupling member
is formed longer than a shortest separation distance between the first tab member and the second tab member adjacent in the second direction and a shortest separation distance between the second tab members.

10. The rechargeable battery module as claimed in any one of claims 2 to 9, wherein
the lower surface of the first holder and the upper surface of the second holder
each include an accommodating portion corresponding to a thickness of the tab to accommodate the tabs.

11. The rechargeable battery module as claimed in claim 10, wherein
the first holder forms an opening on a lower surface thereof with a depth reaching to an electrode terminal of the battery cells,
the second holder forms an opening on an upper surface thereof with a depth reaching the electrode terminal of the battery cells, and
the tab
includes a connection portion that is bent at a first side of the accommodating portion by the depth of the opening to be connected to the electrode terminal.

12. The rechargeable battery module as claimed in any one of claims 1 to 11, further comprising:
a case configured to accommodate a side of the first holder; and
a cover configured to cover a side of the second holder, and
the cover
includes a rib facing and corresponding to the battery cells on an inner surface thereof.

13. The rechargeable battery module as claimed in claim 12, wherein
the rib is formed in a regular hexagon and is repeatedly positioned in the first direction and the second direction.
